# FASCICULE DE BREVET EUROPEEN

(11) **EP 4 005 921 B1**
(45) Date de publication et mention de la délivrance du brevet: **07.08.2024**
(21) Numéro de dépôt: 21206243.4
(22) Date de dépôt: 03.11.2021
(51) Int. Cl.: B64C 27/12, B64C 27/06, B64D 31/14, B64C 27/00

(54) **AÉRONEF À VOILURE TOURNANTE MUNI D'UNE INSTALLATION MOTRICE AVEC UN FREIN MOTEUR AINSI QUE D'UNE ROUE LIBRE ET D'UNE LIAISON DÉBRAYABLE EN PARALLÈLE**
DREHFLÜGELFLUGZEUG, DIE MIT EINER TRIEBWERKSANLAGE MIT MOTORBREMSE SOWIE EINEM FREILAUF UND EINER PARALLEL AUSKUPPELBAREN VERBINDUNG AUSGESTATTET IST
ROTARY WING AIRCRAFT PROVIDED WITH A DRIVE SYSTEM COMPRISING AN ENGINE BRAKE AS WELL AS A FREE WHEEL AND A DISENGAGING CONNECTION IN PARALLEL

(30) Priorité: 30.11.2020 FR 2012424
(43) Date de publication de la demande: 01.06.2022
(73) Titulaire: Airbus Helicopters, 13725 Marignane Cedex (FR)
(72) Inventeur: GARCIN, Patrice, 13820 ENSUES (FR); PRUD'HOMME LACROIX, Pierre, 13127 VITROLLES (FR)
(74) Mandataire: GPI Brevets

(56) Documents cités:
- EP-A1- 2 241 783
- EP-A1- 2 735 512
- EP-A1- 3 409 977

## Description

La présente invention concerne une installation motrice pour un aéronef à voilure tournante, cette installation motrice étant munie d'un frein moteur ainsi que d'une roue libre et d'une liaison débrayable en parallèle.

Un aéronef à voilure tournante comporte une installation motrice pour mettre en rotation sa voilure tournante. L'installation motrice comporte au moins un moteur relié par une chaîne cinématique mécanique à la voilure tournante.

La chaine cinématique mécanique comporte une roue libre par moteur. Chaque roue libre permet notamment d'automatiquement désolidariser fonctionnellement la voilure tournante et le moteur associé en cas de panne du moteur, par exemple afin de mettre en place un mode de vol en autorotation.

Au sein d'un aéronef monomoteur, le mode de vol en autorotation peut être engagé très rapidement grâce à la roue libre. Un engagement rapide de ce mode de vol en autorotation peut permettre à la voilure tournante de conserver une vitesse de rotation suffisante afin de développer la portance requise. En effet, suite à la panne du moteur, le pilote peut baisser rapidement le pas collectif des pales de la voilure tournante vers un pas minimal pour placer la voilure tournante dans le mode de vol en autorotation. Ce pas minimal est parfois dénommé « petit pas ». Par exemple, le pilote déplace un levier de pas collectif vers une butée basse de petit pas. Le pilote contrôle ensuite les évolutions de l'aéronef en pilotant une composante de pas cyclique des pales de la voilure tournante.

Or et indépendamment du nombre de moteurs, la vitesse de rotation de la voilure tournante doit demeurer inférieure à une limite haute. En effet, si la voilure tournante effectue une rotation selon une vitesse trop importante, la voilure tournante risque d'être disloquée sous l'effet de la force centrifuge.

Dans ces conditions, la valeur du petit pas est réglée pour que la vitesse de rotation de la voilure tournante en autorotation ne dépasse pas une vitesse de rotation maximale durant la suite et la fin du vol plané.

Sur un aéronef multimoteur, chaque moteur est associé à sa propre roue libre. La roue libre associée à un moteur en panne permet d'isoler fonctionnellement ce moteur défaillant de la voilure tournante. Le vol peut ainsi continuer en sollicitant le ou les moteurs restants en fonctionnement.

Une telle installation motrice est donc intéressante en cas de panne moteur aussi bien sur un aéronef monomoteur que sur un aéronef multimoteur.

Selon un autre aspect, un pilote peut vouloir effectuer une descendre vers le sol à haute vitesse, par exemple lors d'une opération de sauvetage. Toutefois, lorsque le ou les moteurs ne sont pas en panne, alors la ou les roues libres peuvent induire une limitation de la vitesse de descente de l'aéronef.

En effet, si le pilote engage une descente rapide, alors chaque roue libre désolidarise fonctionnellement le moteur associé de la voilure tournante dès que la vitesse de rotation de cette voilure tournante auto-entrainée dépasse la vitesse de rotation imposée par le ou les moteurs. Le pilote ajuste alors le pas des pales de la voilure tournante non seulement pour diriger l'aéronef mais aussi pour maintenir la vitesse de rotation de la voilure tournante sous la limite haute acceptable. Ces manoeuvres tendent à limiter notamment la vitesse de descente.

Selon un autre aspect, les composants d'une roue libre sont de fait sujets à une usure. Suite à une usure prononcée, une roue libre peut alors devenir glissante.

Les documents EP 3409977 A1, EP 2241783 A1 et EP 2735512 A1 sont connus.

La présente invention a par suite pour objet de proposer un aéronef à voilure tournante ayant une installation motrice visant à permettre d'atteindre une vitesse de descente relativement importante, par exemple dans le cadre d'un aéronef médicalisé, voire apte à sécuriser l'installation motrice en cas d'usure d'une roue libre.

L'invention vise un aéronef muni d'une voilure tournante mue par une chaîne cinématique mécanique de liaison, ledit aéronef ayant une installation motrice, ladite installation motrice ayant au moins un moteur, la chaîne cinématique mécanique de liaison comprenant une roue libre associée audit moteur, ladite roue libre comprenant une partie menante et une partie menée, ladite partie menante étant reliée par une liaison mécanique à un arbre de travail du moteur associé et ladite partie menée étant reliée cinématiquement à la voilure tournante.

L'installation motrice comprend une liaison débrayable qui est agencée en parallèle de la roue libre, la liaison débrayable étant débrayable sur requête pour transmettre sur commande une puissance mécanique entre la voilure tournante et le moteur, ladite installation motrice ayant un système de freinage comprenant un frein moteur dudit moteur associé.

L'expression « liaison mécanique » désigne un système liant mécaniquement le moteur à une roue libre, un tel système pouvant comprendre par exemple au moins une courroie, un volant moteur, au moins un engrenage, au moins un arbre...

L'expression « en parallèle » signifie que la liaison débrayable est un dispositif mécanique liant la voilure tournante et le moteur selon un cheminement différent que le cheminement interne de la roue libre. Un tel cheminement interne de la roue libre passe par son lien de connexion/déconnexion, un tel lien comprenant des rouleaux et des rampes par exemple.

L'expression « liaison débrayable » désigne un système comprenant un dispositif pouvant être connecté ou déconnecté suite à une intervention extérieure, sur ordre d'un pilote par manoeuvre d'une interface homme-machine ou d'un contrôleur dans des conditions prédéterminées, contrairement à une roue libre dépendant seulement des vitesses de rotation de la partie menante et de la partie menée. La liaison débrayable peut de plus comprendre au moins un engrenage, au moins un arbre...

L'expression « moteur associé » désigne le moteur relié à la partie menante d'une roue libre particulière. En effet, en présence de plusieurs moteurs, chaque moteur peut coopérer avec sa propre roue libre.

Ainsi, pour une voire chaque roue libre, une liaison débrayable de transmission directe de puissance peut être agencée en parallèle de cette roue libre entre le moteur associé et la voilure tournante. De plus, chaque liaison débrayable est associée à un système de freinage coopérant notamment avec le moteur associé. Un ou des systèmes de freinage accompagnent donc respectivement la ou les liaisons débrayables en étant notamment configurés pour réguler la vitesse de rotation de la voilure tournante lorsque la ou les liaisons débrayables correspondantes sont dans un mode embrayé. En particulier, le ou les systèmes de freinage et la ou les liaisons débrayables sont rendus actifs lorsque la roue libre associée est glissante et/ou durant une phase de vol en descente et/ou en cas de survitesse de la voilure tournante, et par exemple durant une phase de vol en descente réalisée avec une vitesse verticale supérieure à un seuil de vitesse.

Durant une phase de fonctionnement usuelle, par exemple durant une phase de vol en palier, la ou les liaisons débrayables sont placées dans un mode débrayé. Le ou les moteurs sont reliés fonctionnellement à la voilure tournante par une ou des roues libres respectives.

Un pilote peut par contre piloter le pas des pales de la voilure tournante pour effectuer une descente rapide, par exemple pour aller secourir un individu suite à un accident. Avec un aéronef classique, la ou les roues libres se désengagent et ne transmettent plus de couple à partir dudit seuil de vitesse, et la vitesse de rotation de la voilure tournante risquerait alors de dépasser une limite haute de vitesse de rotation. Selon l'invention, la ou les liaisons débrayables sont placées dans un mode embrayé pour transmettre un couple entre la voilure tournante et le ou les moteurs. Le ou les systèmes de freinage sont alors sollicités pour réguler la vitesse de rotation de la voilure tournante par le biais au moins d'un frein moteur. Par exemple, le ou les systèmes de freinage sont pilotés par un contrôleur pour réguler la vitesse de rotation de la voilure tournante vers une vitesse de consigne mémorisée. A titre illustratif, la vitesse de descente peut alors être par exemple de l'ordre de 1,5 fois à 2 fois la vitesse de descente atteignable sur un aéronef à voilure tournante usuel, sans que la vitesse de rotation de la voilure tournante ne dépasse la limite haute de vitesse de rotation.

L'utilisation d'un système de freinage à frein moteur présente l'avantage de faciliter la mise en oeuvre de l'invention.

Par ailleurs, en cas de glissement détecté d'une roue libre, la liaison débrayable agencée en parallèle de cette roue libre peut éventuellement être positionnée dans le mode embrayé pour compenser le dysfonctionnement de la roue libre. Il peut en aller de même en présence d'une survitesse de la voilure tournante.

L'aéronef peut de plus comporter une ou plusieurs des caractéristiques qui suivent.

Selon une caractéristique optionnelle, ladite roue libre peut comporter un lien de connexion/déconnexion disposé entre la partie menante et la partie menée, le lien de connexion/déconnexion solidarisant en rotation la partie menante et la partie menée dans un mode engagé.

Selon une caractéristique optionnelle compatible avec la précédente et conformément à une première variante d'agencement, la chaîne cinématique mécanique de liaison peut comprendre une boîte de transmission de puissance munie d'une entrée moteur reliée à ladite partie menée, ladite liaison débrayable pouvant être agencée entre le moteur associé et une entrée dédiée de la boîte de transmission de puissance.

Cette première variante consiste à créer une nouvelle ligne de transmission de puissance entre le moteur et la nouvelle entrée de la boîte de transmission de puissance. L'entrée dédiée est de fait une entrée mécanique différente de l'entrée moteur usuelle.

La liaison débrayable peut être dimensionnée pour présenter le même facteur de réduction de vitesse que la liaison comprenant la roue libre associée.

La liaison débrayable peut être dimensionnée pour transmettre, de la voilure tournante vers le moteur, un couple moteur égal au couple moteur généré par le moteur associé lors de l'application d'un régime moteur particulier. Par exemple, ce régime moteur particulier est le régime durant lequel le moteur peut développer la puissance dénommée « puissance maximale continue » par l'homme du métier.

Ladite liaison débrayable est agencée entre ladite partie menante et un arbre de liaison de ladite partie menée.

Un équipement peut comprendre une roue libre à embrayage intégré. Cette deuxième variante présente l'avantage de ne pas nécessiter la modification d'une boîte de transmission de puissance pour implémenter l'invention. Cette deuxième variante est notamment intéressante dans le cadre de l'utilisation d'un moteur entrainant la roue libre via une courroie.

La liaison débrayable comporte au moins un disque d'embrayage mobile en translation et un actionneur d'embrayage qui est configuré pour déplacer en translation ledit disque d'embrayage entre une position débrayée atteinte dans un mode débrayé et une position embrayée atteinte dans un mode embrayé.

La liaison débrayable comprend ainsi un embrayage muni d'un disque d'embrayage. La liaison débrayable peut comporter au moins un disque plan, conique ou autre, la liaison débrayable pouvant avoir plusieurs disques d'embrayage.

Par défaut, l'actionneur d'embrayage peut par exemple placer la liaison débrayable dans le mode débrayé en plaçant le disque d'embrayage dans sa position débrayée. Par contre, l'actionneur d'embrayage peut placer la liaison débrayable dans le mode embrayé durant une descente rapide ou en cas de glissement de la roue libre par exemple, en déplaçant le disque d'embrayage dans sa position embrayée.

Le disque d'embrayage peut être mobile en translation soit pour être plaqué contre une face de contact de la partie menante dans le mode embrayé, soit pour être décollé de la face de contact dans le mode débrayé.

Selon une caractéristique optionnelle compatible avec les précédentes et quelle que soit la variante d'agencement éventuelle, ledit aéronef peut comporter un contrôleur d'embrayage en communication par une liaison de communication avec ladite liaison débrayable, ledit contrôleur d'embrayage communiquant avec au moins un senseur de surveillance et étant configuré pour placer ladite liaison débrayable dans un mode débrayé ou un mode embrayé sous condition d'un signal de surveillance émis par ledit au moins un senseur de surveillance.

Par exemple, ledit au moins un senseur de surveillance peut comporter un senseur de détection d'une phase de vol en descente.

Eventuellement, un tel senseur de détection d'une phase de vol en descente peut comprendre un senseur de vitesse verticale. Le contrôleur d'embrayage détermine alors si la vitesse verticale est inférieure à un seuil mémorisé, une phase de vol en descente étant détectée lorsque la vitesse verticale est inférieure à ce seuil mémorisé.

Selon un autre exemple, un senseur de détection d'une phase de vol en descente peut comprendre un senseur déterminant si un ordre de descente est émis, par exemple une antenne recevant une commande envoyée à distance dans le cadre d'un drone. Un contrôleur de vol peut alors être configuré pour dans un premier temps transmettre un signal au contrôleur d'embrayage afin de commander le passage de la liaison débrayable dans le mode embrayé, puis après quelques secondes éventuellement, commander la descente en tant que telle de manière usuelle.

Selon un autre exemple, un senseur de détection d'une phase de vol en descente peut comprendre une interface activable par un pilote. Cette interface peut transmettre un signal au contrôleur d'embrayage afin de commander le passage de la liaison débrayable dans le mode embrayé.

Par exemple, ledit au moins un senseur de surveillance peut comporter un senseur de mesure d'un glissement de ladite roue libre.

Un tel senseur de mesure d'un glissement de ladite roue libre peut comprendre un senseur amont mesurant une vitesse de rotation de la partie menante, directement ou indirectement sur un organe solidaire en rotation de la partie menante, et un senseur aval mesurant une vitesse de rotation de la partie menée , directement ou indirectement sur un organe solidaire en rotation de la partie menée. Un glissement important peut en effet générer une désynchronisation entre les régimes de rotation de la partie menante et de la partie menée d'une roue libre. Le contrôleur d'embrayage peut alors comparer les mesures effectuées pour déterminer si la roue libre est glissante.

Par exemple, ledit au moins un senseur de surveillance peut comporter un senseur de vitesse pour détecter une survitesse de la voilure tournante.

Un tel senseur peut comprendre un capteur mesurant une vitesse de rotation d'un organe mobile en rotation conjointement avec la voilure tournante, par exemple un mât rotor. Dès lors, le contrôleur d'embrayage peut comporter un comparateur comparant le vitesse de rotation à un seuil de survitesse pour placer la liaison débrayable dans le mode embrayé lorsque la vitesse de rotation mesurée est supérieure au seuil de survitesse afin de rendre actif le système de freinage.

Selon une caractéristique optionnelle compatible avec les précédentes et quelle que soit la variante d'agencement éventuelle, ledit aéronef peut comporter un contrôleur de freinage en communication avec ledit système de freinage, ledit contrôleur de freinage communiquant avec au moins un senseur de vitesse émettant un signal de vitesse fonction d'une vitesse de rotation de la voilure tournante, ledit contrôleur de freinage étant configuré pour réguler ladite vitesse de rotation de la voilure tournante en fonction du signal de vitesse.

Le cas échéant, le contrôleur de freinage et le contrôleur d'embrayage peuvent être des sous-ensembles d'un même contrôleur. Par exemple, le contrôleur de freinage et le contrôleur d'embrayage représentent deux segments de code différents d'un même contrôleur.

Selon une caractéristique optionnelle compatible avec les précédentes et quelle que soit la variante d'agencement éventuelle, ledit moteur pouvant émettre des gaz d'échappement, ledit frein moteur peut comporter un clapet de régulation d'un débit de gaz d'échappement, le clapet de régulation d'un débit de gaz d'échappement étant piloté par un actionneur de régulation.

En l'absence de descente rapide, le clapet de régulation peut être dans une première position maximisant la surface de passage des gaz d'échappement. Par contre, durant une descente rapide, le clapet de régulation peut être déplacé pour au moins réduire cette surface de passage afin de freiner le moteur en bloquant au moins partiellement les gaz d'échappement. La position du clapet de régulation est par exemple réglée en fonction de la vitesse de rotation de la voilure tournante.

Si le moteur est un moteur turbocompressé muni de fait d'un turbocompresseur, le clapet de régulation peut être agencé sur une ligne d'échappement en amont du turbocompresseur selon un sens de circulation des gaz d'échappement. Cet agencement peut permettre d'éviter de faire subir au turbocompresseur la surpression résultant d'un freinage obtenu en fermant le clapet de régulation.

Selon une caractéristique optionnelle compatible avec les précédentes et quelle que soit la variante d'agencement éventuelle, ledit frein moteur peut comporter une soupape de décharge d'échappement.

L'utilisation d'une soupape de décharge d'échappement peut permettre d'éviter des effets pneumatiques dans le moteur lors de l'utilisation du clapet de régulation par exemple.

Selon une caractéristique optionnelle compatible avec les précédentes et quelle que soit la variante d'agencement éventuelle, ladite chaîne cinématique mécanique de liaison pouvant comprendre une boîte de transmission de puissance munie d'une entrée moteur reliée à ladite partie menée, ledit système de freinage comporte un frein complémentaire agencé sur un organe interposé mécaniquement entre le moteur associé et la boîte de transmission de puissance.

Le frein moteur peut ainsi être complété par un autre frein agencé entre le moteur et la voilure tournante pour obtenir un meilleur freinage si nécessaire. Un tel frein complémentaire peut prendre la forme d'un frein de roue à disque, d'un frein à courants de Foucault, d'un frein de Froude utilisant l'air comme fluide...

Selon une caractéristique optionnelle compatible avec les précédentes et quelle que soit la variante d'agencement éventuelle, ledit au moins un moteur pouvant comprendre plusieurs moteurs, ladite installation motrice peut comprendre un système de freinage par moteur, chaque moteur coopérant avec une roue libre qui lui est propre et une dite liaison débrayable qui lui est propre.

Outre un aéronef, l'invention vise un procédé pouvant être mis en oeuvre par un tel aéronef.

Ainsi, l'invention vise un procédé d'optimisation d'une vitesse de descente d'un aéronef muni d'une voilure tournante mue par une chaîne cinématique mécanique de liaison, ledit aéronef ayant une installation motrice, ladite installation motrice ayant au moins un moteur, la chaîne cinématique mécanique de liaison comprenant une roue libre associée audit moteur, ladite roue libre comprenant une partie menante et une partie menée, ladite partie menante étant reliée par une liaison mécanique à un arbre de travail du moteur associé et ladite partie menée étant reliée cinématiquement à la voilure tournante.

Ce procédé comporte les étapes suivantes :
- positionnement dans un mode embrayé d'une liaison débrayable qui est agencée en parallèle de la roue libre et qui est configurée pour transmettre une puissance mécanique entre la voilure tournante et le moteur associé dans ce mode embrayé,
- régulation d'une vitesse de rotation de ladite voilure tournante par freinage avec un système de freinage comprenant un frein moteur dudit moteur associé.

L'invention et ses avantages apparaîtront avec plus de détails dans le cadre de la description qui suit avec des exemples donnés à titre illustratif en référence aux figures annexées qui représentent :
la figure 1, un vue illustrant un aéronef selon l'invention,
la figure 2, une vue en coupe d'une liaison débrayable,
la figure 3, une vue illustrant un aéronef selon l'invention,
la figure 4, une vue illustrant le procédé de l'invention en présentant un aéronef ayant une liaison débrayable dans le mode débrayé, et
la figure 5, une vue illustrant le procédé de l'invention en présentant un aéronef ayant une liaison débrayable dans le mode embrayé.

Les éléments présents dans plusieurs figures distinctes sont affectés d'une seule et même référence.

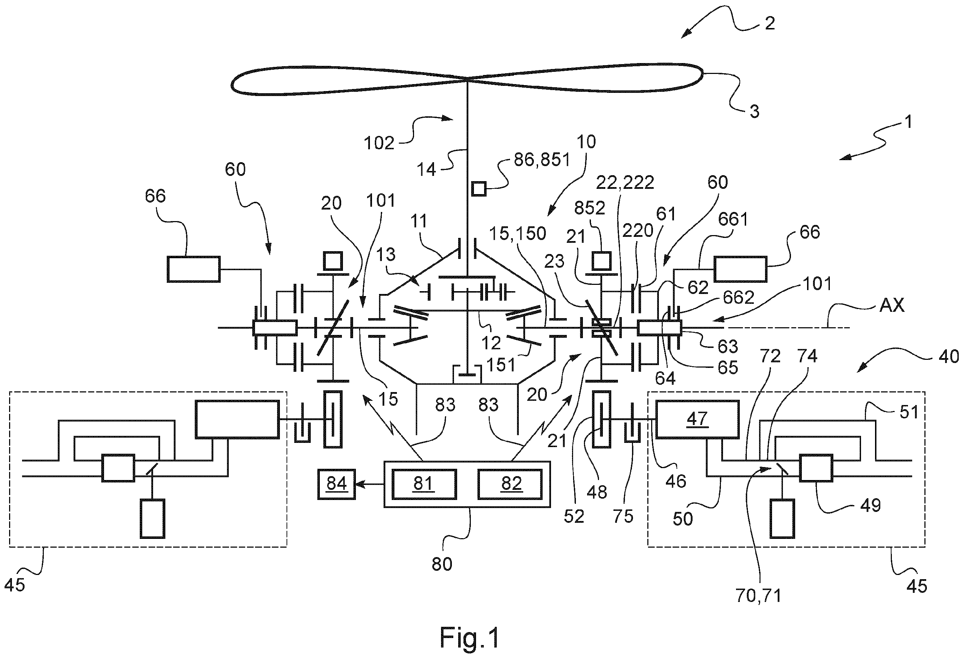

La figure 1 illustre un exemple d'aéronef 1 selon l'invention. Cet aéronef 1 peut être un giravion de type hélicoptère ou autres. Cet aéronef 1 peut être un aéronef ayant un pilote embarqué ou peut être un drone. Cet aéronef 1 est représenté schématiquement pour ne pas alourdir inutilement les figures.

Indépendamment de ces aspects, l'aéronef 1 comporte une voilure tournante 2 munie d'une pluralité de pales 3. Le pas des pales 3 peut être piloté cycliquement et collectivement, par un pilote humain embarqué ou non, voire par un système de pilotage automatique, de manière usuelle.

Pour mettre en rotation la voilure tournante 2, l'aéronef 1 comporte une installation motrice 40 qui est reliée notamment à la voilure tournante 2 par une chaîne cinématique mécanique de liaison 10.

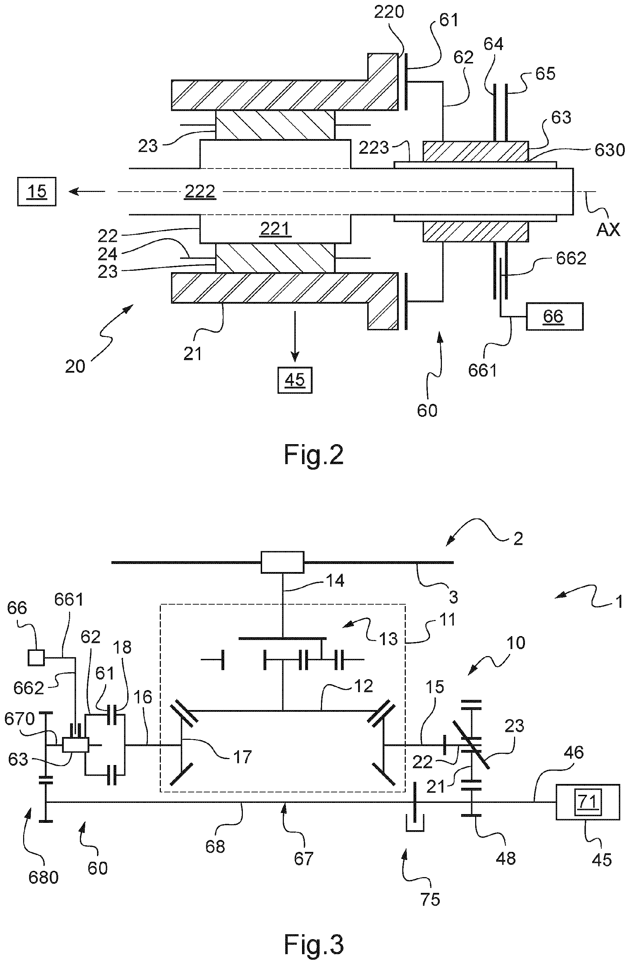

Cette installation motrice 40 est ainsi munie d'au moins un moteur 45. La figure 1 illustre un exemple comprenant deux moteurs 45, alors que les figures 3 à 5 illustrent des exemples ayant un unique moteur 45. Il est possible d'avoir plus de deux moteurs 45 si nécessaire. La chaîne cinématique mécanique de liaison 10 peut comporter un premier tronçon 101 par moteur 45, le ou les premiers tronçons 101 étant reliés à un deuxième tronçon 102 mettant en mouvement la voilure tournante 2.

Selon l'exemple illustré, le deuxième tronçon 102 comporte une boîte de transmission de puissance 11 comprenant un mât rotor 14 mettant en rotation la voilure tournante 2. Par exemple, la boîte de transmission de puissance 11 comporte une entrée moteur 15 par moteur. Au moins une voire chaque entrée moteur 15 comporte éventuellement un arbre 150 portant un pignon 151 qui engrène une roue d'addition 12. La roue d'addition 12 peut entraîner directement le mat rotor 14 ou indirectement par au moins un étage de réduction de vitesse épicycloïdal 13.

Pour au moins un voire plusieurs ou chaque moteur 45 selon la figure 1, le premier tronçon 101 associé de la chaîne cinématique mécanique de liaison 10 comprend une roue libre 20 associée à ce moteur 45.

Une telle roue libre 20 est alors pourvue d'une partie menante 21. La partie menante 21 est reliée par une liaison mécanique à un arbre de travail 46 du moteur 45 associé.

Le moteur 45 peut être un moteur à pistons. Le moteur 15 peut être muni d'un vilebrequin formant ledit arbre de travail 46.

Selon l'exemple illustré, l'arbre de travail 46 peut porter un volant moteur 48 entrainant une courroie 52 qui engrène la partie menante 21. L'arbre de travail peut entraîner la partie menante 21 de manière différente, par exemple via des engrenages.

Par ailleurs, la roue libre 20 est munie d'une partie menée 22. La partie menée 22 est reliée cinématiquement à la voilure tournante 2. Par exemple, la partie menée 22 comporte un arbre 222 qui est rendue solidaire, de manière usuelle, à une entrée moteur 15 de la boîte de transmission de puissance 11.

La partie menante 21 peut être une pièce monolithique ou peut comprendre plusieurs pièces fixées les unes ou autres. La partie menée 22 peut être une pièce monolithique ou peut comprendre plusieurs pièces fixées les unes ou autres. Au moins un tronçon de la partie menante 21 ou de la partie menée 22 peut présenter une symétrie de révolution par rapport à l'axe de rotation de la roue libre 20.

Selon une variante de positionnement illustrée, la partie menante 21 peut se trouver radialement au moins partiellement autour de la partie menée 22.

Par ailleurs, à l'arrêt ou tant que la partie menée 22 tourne plus vite que la partie menante 21 autour d'un axe de rotation, la roue libre 20 est dans un mode de fonctionnement dénommé « désynchronisé » ou « désengagé » par commodité. La partie menante 21 ne transmet pas un couple moteur à la partie menée 22 et inversement. La partie menée 22 et la partie menante 21 sont désolidarisées en rotation autour de l'axe de rotation.

Par contre, dans un mode de fonctionnement dénommé « mode synchronisé » ou « mode engagé », la partie menante 21 et la partie menée 22 tournent à la même vitesse et conjointement autour de l'axe de rotation, hors cas de panne. La partie menante 21 transmet un couple moteur à la partie menée 22.

A cet effet, la roue libre 20 comporte un lien de connexion/déconnexion 23 disposé entre la partie menante 21 et la partie menée 22 pour d'une part lier en rotation autour de l'axe de rotation AX la partie menante 21 et la partie menée 22 durant le mode engagé et, d'autre part, désolidariser en rotation autour de l'axe de rotation AX la partie menante 21 et la partie menée 22 durant le mode désengagé.

Par suite, le lien de connexion/déconnexion 23 solidarise en rotation automatiquement, à savoir sans intervention extérieure, la partie menante 21 et la partie menée 22 tant que la partie menée 22 et la partie menante 21 sont en rotation à la même vitesse.

Par exemple, le lien de connexion/déconnexion 23 comporte une pluralité de rouleaux qui sont éventuellement disposés chacun dans une cage 24 visible sur la figure 2. Les rouleaux sont agencés radialement entre des rampes 221 respectives et une face cylindrique. Par exemple, les rampes 221 sont solidaires de l'arbre 222 de la partie menée 22 et la face cylindrique appartient à la partie menante 21. Selon une autre réalisation, la roue libre peut comprendre des galets, au moins un cliquet...

Par ailleurs, pour au moins un moteur 45 et quel que soit le nombre de moteurs 45, l'installation motrice 40 comprend une liaison débrayable 60 et un système de freinage 70.

Selon l'exemple de la figure 1, en présence de plusieurs moteurs 45, l'installation motrice 40 peut avoir un système de freinage 70 par moteur 45, chaque moteur 45 coopérant avec une roue libre 20 qui lui est propre et avec une liaison débrayable 60 qui lui est propre.

En présence de plusieurs moteurs 45, il est aussi possible de ne pas associer au moins un des moteurs à une liaison débrayable et à un système de freinage.

Indépendamment de cet aspect, la liaison débrayable 60 d'un moteur 45 est agencée fonctionnellement en parallèle de la roue libre 20 en étant configurée pour transmettre ou ne pas transmettre sur requête une puissance mécanique entre la voilure tournante 2 et le moteur 45.

Une telle liaison débrayable 60 comporte un embrayage. Cet embrayage comprend au moins un disque d'embrayage 61 qui est mobile en translation, selon un axe de translation, pour rendre solidaire la voilure tournante 2 et l'arbre de travail 46 du moteur 45 seulement dans des conditions prédéterminées. De plus, la liaison débrayable 60 possède un actionneur d'embrayage 66 commandant l'embrayage. Cet actionneur d'embrayage 66 est lié au disque d'embrayage 61 par divers organes pour déplacer en translation ledit disque d'embrayage 61 entre une position débrayée dans laquelle le disque d'embrayage 61 est libre et une position embrayée dans laquelle le disque d'embrayage 61 est rendu solidaire par friction d'un autre organe de la chaîne cinématique mécanique de liaison 10. Par exemple, un tel actionneur d'embrayage 66 peut prendre la forme d'un vérin linéaire, par exemple électrique ou hydraulique.

Selon un exemple, l'embrayage de la liaison débrayable 60 peut comprendre un presseur 62 qui porte le disque d'embrayage 61. Le presseur 62 est porté par un coulisseau 63 solidaire en rotation autour de l'axe de translation avec un arbre d'entraînement. Le coulisseau 63 est de plus mobile en translation le long de cet arbre d'entraînement. Dès lors, l'actionneur d'embrayage 66 peut être par exemple un actionneur linéaire muni d'une tige de commande 661 mobile en translation. Cette tige de commande 661 peut être solidaire en translation du coulisseau 63, le coulisseau 63 comprenant néanmoins un degré de liberté en rotation autour de l'axe de translation par rapport à la tige de commande 661. Par exemple, cette tige de commande 661 peut être coudée et/ou comprendre une extrémité 662 qui s'étend, radialement au regard de l'axe de translation selon l'exemple, dans une fente du coulisseau 63. Cette fente peut être ménagée entre deux butées annulaires 64, 65 du coulisseau 63.

Selon la deuxième variante d'agencement de la figure 1, une telle liaison débrayable 60 peut être agencée entre d'une part la partie menante 21 de la roue libre 20 associée et, d'autre part un arbre de liaison 222 de la partie menée 22.

La figure 2 illustre un exemple d'une telle liaison débrayable 60. Le disque d'embrayage 61 est mobile en translation selon un axe de translation confondu avec l'axe de rotation AX de la roue libre 20. Dans une position embrayée, le disque d'embrayage 61 est plaqué contre une face de contact 220 de la partie menante 21. Dans une position débrayée le disque d'embrayage 61 est décollé de la face de contact 220. Le coulisseau 63 peut comporter des cannelures droites 630 coopérant avec des cannelures complémentaires 223 de l'arbre de liaison 222 de la roue libre 20. Ainsi, le coulisseau 63 est mobile en rotation autour de l'axe de rotation AX conjointement avec la partie menée 22 de la roue libre, mais mobile en translation selon l'axe de rotation AX par rapport à la partie menée 22.

Selon la première variante d'agencement de la figure 3, une telle liaison débrayable 60 d'un moteur 45 peut être agencée entre le moteur 45 et une entrée dédiée 16 de la boîte de transmission de puissance 11. Cette entrée dédiée 16 peut par exemple comprendre un arbre s'étendant d'un pignon 17, par exemple en prise sur la roue d'addition 12, jusqu'à un anneau 18.

Selon l'exemple illustré, l'arbre de travail 46 du moteur 45 peut être prolongé par une liaison 67 débouchant sur une liaison débrayable 60. La liaison débrayable 60 comporte un disque d'embrayage 61 pouvant être plaqué contre une face d'appui de l'anneau 18 de l'entrée dédiée 16.

Par exemple, la liaison débrayable 60 peut être du type décrit précédemment. Le coulisseau 63 peut comporter des cannelures droites coopérant avec des cannelures complémentaires d'un arbre 670 de la liaison 67. Selon l'exemple illustré, cet arbre 670 est relié par au moins un engrenage 680 à un arbre 68 mis en mouvement par le moteur 45.

Le coulisseau 63 est par ailleurs mobile en translation par rapport à cet arbre 670 selon un axe de translation, et mobile en rotation autour de cet axe de translation conjointement avec cet arbre 670.

Quelle que soit la variante d'agencement et la manière de réaliser une liaison débrayable 60, la figure 1 illustre un aéronef 1 qui comporte un contrôleur d'embrayage 81 pour commander la ou les liaisons débrayables 60.

Le terme « contrôleur » désigne une unité de traitement pouvant comprendre par exemple au moins un processeur et au moins une mémoire, au moins un circuit intégré, au moins un système programmable, au moins un circuit logique, ces exemples ne limitant pas la portée donnée au terme « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le contrôleur d'embrayage 81 peut comprendre une unique unité, voire plusieurs unités pouvant communiquer les unes avec les autres par exemple.

Le contrôleur d'embrayage 81 peut être une partie d'un contrôleur général 80 pouvant assurer d'autres fonctions.

Dès lors, l'aéronef 1 comporte une liaison de communication 83, filaire ou non filaire, mettant en communication le contrôleur d'embrayage 81 avec la ou les liaisons débrayables 60, et notamment avec le ou les actionneurs d'embrayage 66.

Pour commander le ou les actionneurs d'embrayage 66, l'aéronef 1 peut comporter au moins un senseur de surveillance 84, 85 transmettant au moins un signal au contrôleur d'embrayage 81.

Par suite, le contrôleur d'embrayage 81 est configuré pour placer la liaison débrayable 60 dans le mode débrayé ou le mode embrayé en fonction d'instructions mémorisées et du signal de surveillance émis par le ou les senseurs de surveillance 84, 85.

Dès lors, au moins un senseur de surveillance peut comporter un senseur 84 de détection d'une phase de vol en descente et/ou au moins un senseur de surveillance peut comporter un senseur 85 de mesure d'un glissement de ladite roue libre 20.

Un senseur 84 de détection d'une phase de vol en descente peut par exemple comprendre un senseur de vitesse verticale usuel, un senseur déterminant l'émission d'un ordre de descente, un senseur déterminant la sollicitation d'une interface homme-machine...

Un senseur 85 de mesure d'un glissement de ladite roue libre 20 peut comprendre un senseur d'une vitesse de rotation en amont de la roue libre 20, par exemple un senseur 852 de vitesse de rotation de la partie menante, et un senseur d'une vitesse de rotation en aval de la roue libre 20, par exemple un senseur 851 de vitesse de rotation du mât rotor.

Indépendamment des aspects précédemment décrits, pour chaque liaison débrayable 60 coopérant avec un moteur 45, l'installation motrice 40 comporte un système de freinage 70. Le système de freinage associé à une liaison débrayable 60 comprend à minima un frein moteur 71 du moteur 45 correspondant.

Eventuellement, un contrôleur de freinage 82 est en communication, par une liaison filaire ou non filaire, avec le système de freinage 70. Le contrôleur de freinage 82 peut comprendre une unique unité, voire plusieurs unités pouvant communiquer les unes avec les autres par exemple. Le contrôleur de freinage 82 peut être une partie d'un contrôleur général 80 pouvant assurer d'autres fonctions.

Pour piloter le système de freinage 70 d'une liaison débrayable 60, le contrôleur de freinage 82 communique avec au moins un senseur de vitesse 86. Ce senseur de vitesse 86 émet un signal de vitesse fonction d'une vitesse de rotation de la voilure tournante 2. Le senseur de vitesse 86 peut être d'un type usuel, en comprenant pas exemple un capteur de position et un dérivateur ou un accéléromètre et un intégrateur. Le senseur de vitesse 86 peut aussi faire office de senseur de surveillance.

Dès lors, le contrôleur de freinage 82 peut être configuré pour réguler ladite vitesse de rotation de la voilure tournante 2, en sollicitant le système de freinage 70 et notamment le frein moteur 71, en fonction du signal de vitesse reçu.

Par exemple, le frein moteur 71 peut comporter un clapet 72 de régulation d'un débit de gaz d'échappement au sein d'une ligne d'échappement de gaz 50. Le clapet 72 de régulation d'un débit de gaz d'échappement possède une position réglable par un actionneur de régulation 73 commandé par le contrôleur de freinage 82. Le cas échéant, le clapet 72 de régulation d'un débit de gaz d'échappement peut être agencé en amont d'une turbine d'un turbocompresseur 49.

Eventuellement, le frein moteur 71 peut comporter une soupape 74 de décharge d'échappement, pilotée par un actionneur non représenté commandé par le contrôleur de freinage 82. Cette soupape 74 de décharge d'échappement peut être disposée sur une ligne de décharge 51 contournant le turbocompresseur 49. Cette soupape 74 de décharge d'échappement peut être disposée en amont du clapet 72 de régulation d'un débit de gaz d'échappement.

Eventuellement, le système de freinage 70 peut aussi comporter un frein complémentaire 75 agencé sur un organe, par exemple un arbre, apte à rendre solidaire le moteur 45 associé et la voilure tournante 2 lorsque la liaison débrayable 60 est dans le mode embrayé.

Selon la figure 1, un frein à disque 75 peut par exemple être disposé sur l'arbre de travail 46. Selon l'exemple de la figure 3, un frein à disque 75 est agencé sur un arbre 68 de la liaison 67 liant l'arbre de travail 46 à la liaison débrayable 60.

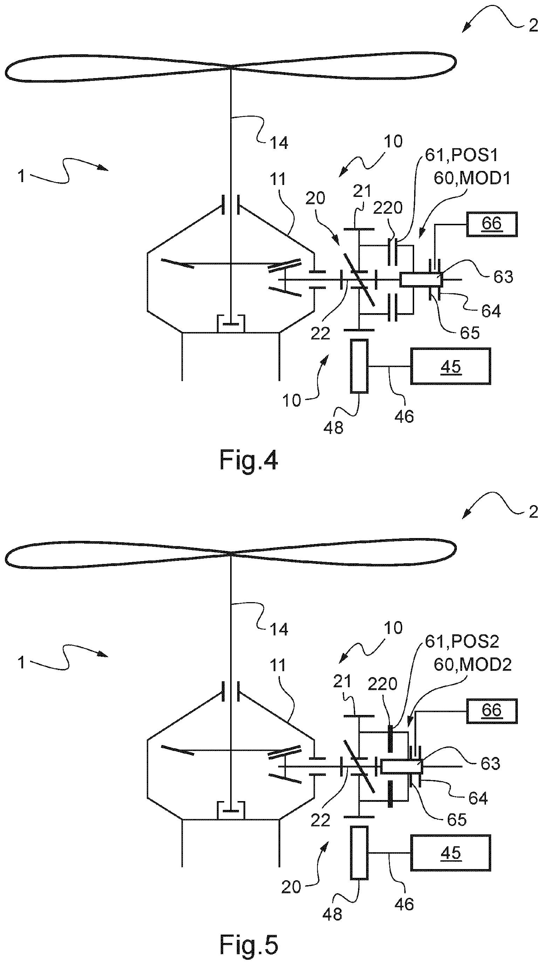

Les figures 4 et 5 illustrent le procédé de l'invention.

En référence à la figure 4, dans des conditions de vol normales, chaque liaison débrayable 60 est positionnée dans sa position débrayée POS1 durant le mode débrayé MOD1. La liaison débrayable 60 ne transmet aucun couple moteur. La roue libre 20 fonctionne de manière classique sur un hélicoptère.

Si un pilote souhaite réaliser une descente rapide détectée par exemple avec le senseur 84 de détection d'une phase de vol en descente ou si un glissement de la roue libre 20 est détecté avec le senseur 85 de mesure d'un glissement de ladite roue libre 20 ou encore si la vitesse de rotation mesurée par le senseur de vitesse dépasse un seuil, alors le procédé comporte une étape de positionnement dans un mode embrayé MOD2 d'une liaison débrayable 60 illustrée sur la figure 5.

Par exemple, le contrôleur d'embrayage 81 commande, éventuellement en fonction d'un signal émis par un des senseurs de surveillance, un ou plusieurs actionneurs d'embrayage 66 pour déplacer au moins un disque d'embrayage 61 dans sa position embrayée.

Si la voilure tournante 2 tend à tourner plus vite que l'arbre de travail 46, la liaison débrayable 60 transmet une puissance de la voilure tournante 2 vers le moteur 45.

Dès lors, le procédé comporte une étape de régulation de la vitesse de rotation de la voilure tournante 2 par freinage avec le système de freinage 70.

Le frein moteur 71 du moteur 45 et éventuellement un frein complémentaire 75 peuvent être activés par le contrôleur de freinage 82 pour maintenir la vitesse de rotation de la voilure tournante 2 sous une limite haute, par exemple en faisant tendre cette vitesse de rotation vers une consigne mémorisée.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Aéronef (1) muni d'une voilure tournante (2) mue par une chaîne cinématique mécanique de liaison (10), ledit aéronef (1) ayant une installation motrice (40), ladite installation motrice (40) ayant au moins un moteur (45), la chaîne cinématique mécanique de liaison (10) comprenant une roue libre (20) associée audit moteur (45), ladite roue libre (20) comprenant une partie menante (21) et une partie menée (22), ladite partie menante (21) étant reliée par une liaison mécanique à un arbre de travail (46) du moteur (45) associé et ladite partie menée (22) étant reliée cinématiquement à la voilure tournante (2), ladite installation motrice (40) comprenant une liaison débrayable (60) qui est agencée en parallèle de la roue libre (20), la liaison débrayable (60) étant débrayable sur requête pour transmettre sur commande une puissance mécanique entre la voilure tournante (2) et le moteur (45),
oû ladite liaison débrayable (60) est agencée entre ladite partie menante (21) et un arbre de liaison (222) de ladite partie menée (22) ladite installation motrice (40) ayant un système de freinage (70) comprenant un frein moteur (71) dudit moteur (45), **caractérisé en ce que** ladite liaison débrayable (60) comporte au moins un disque d'embrayage (61) mobile en translation et un actionneur d'embrayage (66) qui est configuré pour déplacer en translation ledit disque d'embrayage (61) entre une position débrayée (POS1) atteinte dans un mode débrayé (MOD1) et une position embrayée (POS2) atteinte dans un mode embrayé (MOD2), ledit disque d'embrayage (61) étant mobile en translation soit pour être plaqué contre une face de contact (220) de la partie menante (21) dans le mode embrayé (MOD2), soit pour être décollé de la face de contact (220) dans le mode débrayé (MOD1).

2. Aéronef selon la revendication 1,
**caractérisé en ce que** ladite roue libre (20) comporte un lien de connexion/déconnexion (23) disposé entre la partie menante (21) et la partie menée (22), le lien de connexion/déconnexion (23) solidarisant en rotation la partie menante (21) et la partie menée (22) dans un mode engagé.

3. Aéronef selon l'une quelconque des revendications 1 à 2,
**caractérisé en ce que** ledit aéronef (1) comporte un contrôleur d'embrayage (81) en communication par une liaison de communication (83) avec ladite liaison débrayable (60), ledit contrôleur d'embrayage (81) communiquant avec au moins un senseur de surveillance (84, 85) et étant configuré pour placer ladite liaison débrayable (60) dans un mode débrayé (MOD1) ou un mode embrayé (MOD2) sous condition d'un signal de surveillance émis par ledit au moins un senseur de surveillance (84, 85).

4. Aéronef selon la revendication 3,
**caractérisé en ce que** ledit au moins un senseur de surveillance comporte un senseur (84) de détection d'une phase de vol en descente.

5. Aéronef selon l'une quelconque des revendications 3 à 4,
**caractérisé en ce que** ledit au moins un senseur de surveillance comporte un senseur (85) de mesure d'un glissement de ladite roue libre (20).

6. Aéronef selon l'une quelconque des revendications 3 à 5,
**caractérisé en ce que** ledit au moins un senseur de surveillance comporte un senseur de vitesse (86) pour détecter une survitesse de la voilure tournante.

7. Aéronef selon l'une quelconque des revendications 1 à 6,
**caractérisé en ce que** ledit aéronef (1) comporte un contrôleur de freinage (82) en communication avec ladite système de freinage (70), ledit contrôleur de freinage (82) communiquant avec au moins un senseur de vitesse (86) émettant un signal de vitesse fonction d'une vitesse de rotation de la voilure tournante (2), ledit contrôleur de freinage (82) étant configuré pour réguler ladite vitesse de rotation de la voilure tournante (2) en fonction du signal de vitesse.

8. Aéronef selon l'une quelconque des revendications 1 à 7,
**caractérisé en ce que** ledit moteur (45) émettant des gaz d'échappement, ledit frein moteur (71) comporte un clapet (72) de régulation d'un débit de gaz d'échappement, le clapet (72) de régulation d'un débit de gaz d'échappement étant piloté par un actionneur de régulation (73).

9. Aéronef selon l'une quelconque des revendications 1 à 8,
**caractérisé en ce que** ledit frein moteur (71) comporte une soupape (74) de décharge d'échappement.

10. Aéronef selon l'une quelconque des revendications 1 à 9,
**caractérisé en ce que** ladite chaîne cinématique mécanique de liaison (10) comprenant une boîte de transmission de puissance (11) munie d'une entrée moteur (15) reliée à ladite partie menée (22), ledit système de freinage (70) comporte un frein complémentaire (75) agencé sur un organe (46, 68) interposé mécaniquement entre le moteur (45) associé et la boîte de transmission de puissance (11).

11. Aéronef selon l'une quelconque des revendications 1 à 10,
**caractérisé en ce que** ledit au moins un moteur comprenant plusieurs moteurs (45), ladite installation motrice (40) a un système de freinage (70) par moteur (45), chaque moteur (45) coopérant avec une roue libre (20) qui lui est propre et une dite liaison débrayable (60) qui lui est propre.

## Patentansprüche

1. Luftfahrzeug (1) mit einem Drehflügel (2), der von einer mechanischen kinematischen Verbindungskette (10) angetrieben ist, wobei das Luftfahrzeug (1) eine Antriebsanlage (40) aufweist, wobei die Antriebsanlage (40) mindestens einen Motor (45) aufweist, wobei die mechanische kinematische Verbindungskette (10) einen dem Motor (45) zugeordneten Freilauf (20) umfasst, wobei der Freilauf (20) einen antreibenden Teil (21) und einen angetriebenen Teil (22) umfasst, wobei der antreibende Teil (21) durch eine mechanische Verbindung mit einer Arbeitswelle (46) des zugehörigen Motors (45) verbunden ist und der angetriebene Teil (22) kinematisch mit dem Drehflügel (2) verbunden ist, wobei die Antriebsanlage (40) eine auskuppelbare Verbindung (60) umfasst, die parallel zum Freilauf (20) angeordnet ist, wobei die auskuppelbare Verbindung (60) auf Anforderung auskuppelbar ist, um auf Befehl mechanische Leistung zwischen dem Drehflügel (2) und dem Motor (45) zu übertragen,
wobei die auskuppelbare Verbindung (60) zwischen dem antreibenden Teil (21) und einer Verbindungswelle (222) des angetriebenen Teils (22) angeordnet ist, wobei die Antriebsanlage (40) ein Bremssystem (70) aufweist, das eine Motorbremse (71) des Motors (45) umfasst,
**dadurch gekennzeichnet, dass** die auskuppelbare Verbindung (60) mindestens eine translatorisch bewegliche Kupplungsscheibe (61) und einen Kupplungsaktuator (66) umfasst, der konfiguriert ist, um die Kupplungsscheibe (61) translatorisch zwischen einer ausgekuppelten Position (POS1), die in einem ausgekuppelten Modus (MODI) erreicht wird, und einer eingekuppelten Position (POS2), die in einem eingekuppelten Modus (MOD2) erreicht wird, zu bewegen, wobei die Kupplungsscheibe (61) translatorisch beweglich ist, um entweder im eingekuppelten Modus (MOD2) an eine Kontaktfläche (220) des treibenden Teils (21) angedrückt oder im ausgekuppelten Modus (MOD1) von der Kontaktfläche (220) abgehoben zu sein.

2. Luftfahrzeug nach Anspruch 1,
**dadurch gekennzeichnet, dass** der Freilauf (20) eine zwischen dem antreibenden Teil (21) und dem angetriebenen Teil (22) angeordnete Verbindungs-/Trennverbindung (23) aufweist, wobei die Verbindungs-/Trennverbindung (23) in einem eingekuppelten Modus den antreibenden Teil (21) und den angetriebenen Teil (22) drehfest miteinander verbindet.

3. Luftfahrzeug nach einem der Ansprüche 1 bis 2,
**dadurch gekennzeichnet, dass** das Luftfahrzeug (1) eine Kupplungssteuerung (81) umfasst, die über eine Kommunikationsverbindung (83) mit der auskuppelbaren Verbindung (60) kommuniziert, wobei die Kupplungssteuerung (81) mit mindestens einem Überwachungssensor (84, 85) kommuniziert und konfiguriert ist, um die auskuppelbare Verbindung (60) je nach Zustand eines von dem mindestens einen Überwachungssensor (84, 85) gesendeten Überwachungssignals in einen ausgekuppelten Modus (MOD1) oder einen eingekuppelten Modus (MOD2) zu versetzen.

4. Luftfahrzeug nach Anspruch 3,
**dadurch gekennzeichnet, dass** der mindestens eine Überwachungssensor einen Sensor (84) zur Erkennung einer Sinkflugphase umfasst.

5. Luftfahrzeug nach einem der Ansprüche 3 bis 4,
**dadurch gekennzeichnet, dass** der mindestens eine Überwachungssensor einen Sensor (85) zur Messung eines Schlupfs des Freilaufs (20) umfasst.

6. Luftfahrzeug nach einem der Ansprüche 3 bis 5,
**dadurch gekennzeichnet, dass** der mindestens eine Überwachungssensor einen Geschwindigkeitssensor (86) zum Erfassen einer Übergeschwindigkeit des Drehflügels umfasst.

7. Luftfahrzeug nach einem der Ansprüche 1 bis 6,
**dadurch gekennzeichnet, dass** das Luftfahrzeug (1) eine Bremssteuerung (82) in Kommunikation mit dem Bremssystem (70) aufweist, wobei die Bremssteuerung (82) mit mindestens einem Geschwindigkeitssensor (86) kommuniziert, der ein Geschwindigkeitssignal in Abhängigkeit von einer Drehgeschwindigkeit des Drehflügels (2) ausgibt, wobei die Bremssteuerung (82) konfiguriert ist, um die Drehgeschwindigkeit des Drehflügels (2) in Abhängigkeit von dem Geschwindigkeitssignal zu regulieren.

8. Luftfahrzeug nach einem der Ansprüche 1 bis 7,
**dadurch gekennzeichnet, dass** der Motor (45) Abgase ausstößt, dass die Motorbremse (71) ein Ventil (72) zur Regulierung eines Abgasdurchsatzes aufweist, und dass das Ventil (72) zur Regulierung eines Abgasdurchsatzes durch einen Regulierungsaktuator (73) gesteuert ist.

9. Luftfahrzeug nach einem der Ansprüche 1 bis 8,
**dadurch gekennzeichnet, dass** die Motorbremse (71) ein Abgasentlastungsventil (74) aufweist.

10. Luftfahrzeug nach einem der Ansprüche 1 bis 9,
**dadurch gekennzeichnet, dass** die mechanische kinematische Verbindungskette (10) ein Leistungsgetriebe (11) mit einem Motoreingang (15) umfasst, der mit dem angetriebenen Teil (22) verbunden ist, wobei das Bremssystem (70) eine Zusatzbremse (75) umfasst, die an einem Organ (46, 68) angeordnet ist, das mechanisch zwischen dem zugehörigen Motor (45) und dem Leistungsgetriebe (11) eingefügt ist.

11. Luftfahrzeug nach einem der Ansprüche 1 bis 10,
**dadurch gekennzeichnet, dass** der mindestens eine Motor mehrere Motoren (45) umfasst, und die Antriebsanlage (40) ein Bremssystem (70) pro Motor (45) aufweist, wobei jeder Motor (45) mit einem eigenen Freilauf (20) und einer eigenen besagten auskuppelbaren Verbindung (60) zusammenwirkt.

## Claims

1. Aircraft (1) provided with a rotary wing (2) driven by a mechanical kinematic linkage (10), said aircraft having a power plant (40), said power plant having at least one engine (45), the mechanical kinematic linkage (10) comprising a free wheel (20) associated with said engine (45), said free wheel comprising a driving part (21) and a driven part (22), said driving part (21) being connected by a mechanical connection to a working shaft (46) of the associated engine (45) and said driven part (22) being connected kinematically to the rotary wing (2), said power plant (40) comprising a disengaging connection (60) that is arranged in parallel with the free wheel (20), the disengaging connection (60) being disengageable on request in order to transmit mechanical power on command between the rotary wing (2) and the engine (45),
wherein
said disengaging connection (60) is arranged between said driving part (21) and a connecting shaft (22) of said driven part (22), said power plant (40) having a braking system (70) comprising an engine brake (71) of said engine (45), **characterised in that** said disengaging connection (60) comprises at least one
clutch disc (61) that is able to move in translation and a clutch actuator (66) that is configured to move said clutch disc (61) in translation between a disengaged position (POS1) assumed in a disengaged mode (MOD1) and an engaged position (POS2) assumed in an engaged mode (MOD2), said clutch disc (61) being able to move in translation either so as to be pressed against a contact face (220) of the driving part (21) in the engaged mode (MOD2) or so as to be moved away from the contact face (220) in the disengaged mode (MOD1).

2. Aircraft according to claim 1,
**characterised in that** said free wheel (20) comprises a connection/disconnection link (23) arranged between the driving part (21) and the driven part (22), the connection/disconnection link (23) constraining the driving part (21) and the driven part (22) in rotation in an engaged mode.

3. Aircraft according to any one of claims 1 to 2,
**characterised in that** said aircraft (1) comprises a clutch controller (81) in communication with said disengaging connection (60) via a communication link (83), said clutch controller (81) communicating with at least one monitoring sensor (84, 85) and being configured to place said disengaging connection (60) in a disengaged mode (MOD1) or an engaged mode (MOD2) depending on a monitoring signal emitted by said at least one monitoring sensor (84, 85).

4. Aircraft according to claim 3,
**characterised in that** said at least one monitoring sensor comprises a sensor (84) for detecting a descending flight phase.

5. Aircraft according to any one of claims 3 to 4,
**characterised in that** said at least one monitoring sensor comprises a sensor (85) for measuring slippage of said free wheel (20).

6. Aircraft according to any one of claims 3 to 5,
**characterised in that** said at least one monitoring sensor comprises a sensor (86) for detecting an overspeed of the rotary wing.

7. Aircraft according to any one of claims 1 to 6,
**characterised in that** said aircraft (1) comprises a braking controller (82) in communication with said braking system (70), said braking controller (82) communicating with at least one speed sensor (86) emitting a speed signal as a function of a speed of rotation of the rotary wing (2), said braking controller (82) being configured to control said speed of rotation of the rotary wing (2) depending on the speed signal.

8. Aircraft according to any one of claims 1 to 7,
**characterised in that** said engine (45) emitting exhaust gases, said engine brake (71) comprises a valve (72) for controlling an exhaust gas flow rate, the valve (72) for controlling an exhaust gas flow rate being controlled by a control actuator (73).

9. Aircraft according to any one of claims 1 to 8,
**characterised in that** said engine brake (71) comprises an exhaust relief valve (74).

10. Aircraft according to any one of claims 1 to 9,
**characterised in that** said mechanical kinematic linkage (10) comprising a gearbox (11) provided with an engine input (15) connected to said driven part (22), said braking system (70) comprises an additional brake (75) arranged on a member (46, 48) mechanically interposed between the associated engine (45) and the gearbox (11).

11. Aircraft according to any one of claims 1 to 10,
**characterised in that** said at least one engine comprising several engines (45), said power plant (40) has one braking system (70) for each engine (45), each engine (45) cooperating with a free wheel (20) that is specific to it and with a so-called disengaging connection (60) that is specific to it.
